# EUROPEAN PATENT APPLICATION

(11) **EP 1 978 357 A1**
(43) Date of publication of application: **08.10.2008**
(21) Application number: 07007087.5
(22) Date of filing: 04.04.2007
(51) Int. Cl.: G01N 29/04, G01S 13/87

(54) **Method of non-destructively testing a work piece and non-destructive testing arrangement**

(71) Applicant: SIEMENS AKTIENGESELLSCHAFT, 80333 München (DE)
(72) Inventor: Stiesdal, Henrik, 5000 Odense C (DK)

(57) **Abstract**

A method of non-destructively testing a work piece (2), wherein the work piece (2) is placed within an active field of a positioning system (8,9), a frame of reference (3,4,5,6) of the work piece (2) is established in the coordinates of the positioning system (8,9), testing data is acquired for the work piece (2) with a non-destructive testing probe (15), which comprises a transponder of the positioning system (8,9), while the position of the testing probe (15) is recorded by the positioning system (8,9), the position of the testing probe (15) is transformed into an intrinsic position defined with respect to the frame of reference (3,4,5,6) of the work piece (2), and the intrinsic position of the testing probe (15) is assigned to the testing data recorded at the respective position. Further, a non-destructive testing arrangement comprising a non-destructive testing probe (15), equipped with a transponder for a positioning system (8,9), is provided.

## Description

The present invention relates to a method of non-destructively testing a work piece and a non-destructive testing arrangement.

In non-destructive testing (NDT) of large structures, in particular wind turbine blades, a non-destructive testing readout corresponds to a non-destructive testing probe position. Often the exact position is required for further applications, such as repairs or inspections. Possibly such applications are realised at a later date than the non-destructive testing.

Generally the determination of the position of a non-destructive testing probe and the recovery of a particular position can be realised by optical or other marking on the structure where the original testing has been performed. Such marking should unambiguously correlate to a particular non-destructive testing readout and should be recognisable for different persons. Moreover, the marking should be non-destructive, but also resistant against different environmental influences. These requirements are difficult to reach.

Another possibility is the use of large two-dimensional scanners, for instance arrays of non-destructive testing probes that are guided automatically over the surface to be scanned. This arrangement requires the positioning of the structure to be tested in a specific fixture, which reduces flexibility and causes risk of constraints.

It is therefore an objective of the present invention to provide a method that allows a determination as well as a recovery of a particular position of a non-destructive testing probe. It is a further objective of the present invention to provide an advantageous non-destructive testing arrangement.

These objectives are solved by a method of non-destructively testing a work piece as claimed in claim 1 and a non-destructive testing arrangement as claimed in claim 8. The depending claims define further developments of the invention.

The following definitions are applied for further considerations. A positioning system means an arrangement, which comprises at least one transmitter, at least one transponder and an analysis unit. In the simplest case a transponder means an indentation fixed on a particular position of a work piece.

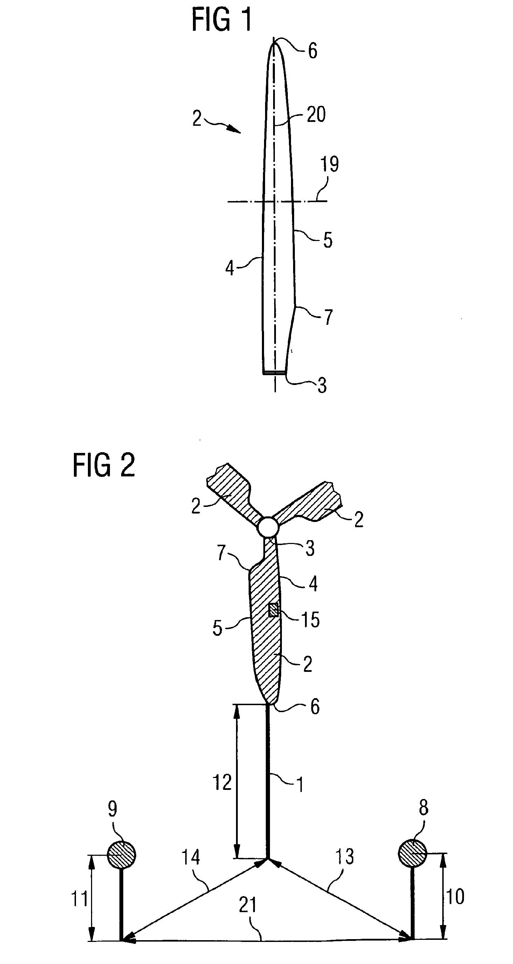

A wind turbine blade (2) is characterised by the blade root (3), the tip (6), the leading edge (4), the trailing edge (5) and the shoulder (7). A frame of reference of a wind turbine blade (2) can be based on the span line (20) and a chord line (19) perpendicular to the span line. For illustration of the mentioned terms see Figure 1.

The inventive method of non-destructively testing a work piece comprises the following steps. At first the work piece is placed within an active field of a positioning system. Then a frame of reference of the work piece is established in the coordinates of the positioning system. Now testing data is acquired for the work piece with a non-destructive testing probe, which comprises a transponder of the positioning system, while the position of the testing probe is recorded by the positioning system. The position of the testing probe is transformed into an intrinsic position defined with respect to the frame of reference of the work piece and the intrinsic position of the testing probe is assigned to the testing data recorded at the respective position.

The simultaneous recording of the non-destructive testing probe readings and the intrinsic position allows a direct coupling between the non-destructive testing probe reading and the position of the work piece irrespective of its orientation in three dimensions. The results can be stored in a database and can possibly be also presented on a screen.

Generally there is no need for the work piece to be in the same spatial orientation every time, especially for later applications. This means for instance that a work piece can be tested somewhere in the factory and can later be repaired or be tested again somewhere else, e.g. in the field. The position of a particular testing readout can be recovered independently of the actual spatial orientation of the work piece, once the frame of reference of the work piece in its actual orientation is established, since it is defined in the frame of reference of the work piece.

It is advantageous to establish the frame of reference of the work piece based on the geometry of the work piece. In the case of a wind turbine blade, which can be a possible work piece, a meaningful frame of reference can be established by using a chord line and the span line of the blade.

For locating of the former chosen frame of reference of the work piece in its current position, the geometry of the work piece can detected by scanning at least parts of the contour of the work piece with a transponder of the positioning system, with or without the non-destructive testing probe.

One possibility is to scan the whole work piece along a typical contour. For a wind turbine blade this could be the contour from the blade root along the leading edge to the tip and back again to the root along the tailing edge. Another possibility is it to scan with the transponder only a few sufficient features or points, which allow a reproduction of the frame of reference of the work piece.

Moreover, the geometry of the work piece can also be detected by determining the position of specific transponders, which are permanently fixed to, or under the surface of, the work piece at positions which allow a reproduction of the frame of reference, by the positioning system. For a wind turbine blade this could be three permanently fixed transponders, one fixed at the blade root, a second at the tip and a third fixed at the shoulder. The locations of the transponders only need to allow for identifying the kind of blade and its orientation. Then, the frame of reference can be established based on the known orientation and the known identity of the blade.

During the following non-destructive testing the position and assigned testing data can be stored in a database and can also be presented on a screen. The database can be created in any relevant format and can give any desirable readout, such as progressive scan, contour plots or colour-coded shading, and that can be fitted with templates, rejection criteria or alarms.

The non-destructive testing probe comprising the transponder can further comprise the analysis unit and/or a display, which shows the coordinates of the position and/or the non-destructive testing probe readout during the testing process. Moreover, the analysis of position and/or testing data can be done with a PC. The testing can be done manually or with a tool, e.g. a robot or a small vehicle for positions possibly difficult to reach otherwise.

Of course, the non-destructive testing and simultaneously position recording can also be done before establishing the frame of reference of the work piece in the coordinates of the positioning system.

When the testing is done it is possible to make any desired plot, e.g. contour plots of non-destructive testing reading versus position, sections in any direction, and so on. If necessary, one can go back and redo anything that was not properly tested or one can test a particular feature again. Upon completion of the testing a record with the position data and the corresponding non-destructive testing readout data can be generated automatically.

The inventive method can be repeated elsewhere, including in the field, e.g. on a wind turbine blade mounted on a wind turbine. In such case the transmitters of the positioning system are placed on the ground in suitable locations giving a good three-dimensional fix on any location of the blade surface, e.g. when the blade is pointing vertically downwards. The actual testing can than be done by a person rappelling down the blade, thereby eliminating any need for expensive cranes or even blade demounting. The scanning can also be done by a crane, of course.

The inventive non-destructive testing arrangement comprises a non-destructive testing probe equipped with a transponder for a positioning system. It can comprise a positioning system with at least one transmitter, which emits directional radiation the direction of which can be controlled. Alternatively the inventive non-destructive testing arrangement can comprise a positioning system with at least two transmitters, which emit non-directional radiation. Advantageously, the positioning system comprises 3 or more transmitters. A PC can be used as an analysis unit for the positioning system and/or the non-destructive testing probe. As a third alternative, the non-destructive testing arrangement can make use of a publicly available positioning system, like e.g. GPS.

Additionally, the inventive non-destructive testing arrangement can comprise a database for storing the position and the assigned testing data in a format that gives progressive scan, contour plots or colour-coded shading, and that can be fitted with templates, rejection criteria or alarms.

Generally, the positioning system can be a GPS (Global Positioning System), a differential GPS, an ultrasonic positioning system, a laser positioning system, a radar positioning system, etc.. Further, a wireless display can be attached to the positioning system transponder.

The non-destructive testing probe can for example be an ultrasonic probe, an x-ray probe, a nuclear magnetic resonance probe, a heat flow direction probe, etc..

The advantages of the inventive method of non-destructively testing a work piece and the inventive non-destructive testing arrangement are the following. The described method and the described arrangement allow a precise correlation between non-destructive testing readout and probe position in the reference frame of the work piece, especially for the testing of large structures. Moreover, the structure can be tested in every position, as long as this position can be reached with the non-destructive testing probe. This eliminates any need for expensive cranes or even demounting of the structure.

Further, for later purposes, especially for the repair, the location of a particular non-destructive testing readout is easy to recover once the frame of reference is established for the actual orientation. The recovering can also be done using the inventive method or the inventive non-destructive testing arrangement. For the purpose of the recovering of particular positions it is of course possible to use only the described positioning system without the non-destructive testing probe.

Further features, properties and advantages of the present invention will become clear from the following description of embodiments in conjunction with the accompanying drawings.

Fig. 1 shows a wind turbine blade in a plan view onto the plane defined by the blade's span and the blade's chord.

Fig. 2 schematically shows a wind turbine blade with a local positioning system in a perspective view.

Fig. 3 schematically shows a wind turbine blade and two transmitters in a frontal view.

Fig. 4 schematically shows a wind turbine blade equipped with permanent transponders and a local positioning system in a perspective view.

Figure 1 shows a wind turbine blade (2) in a plan view onto the plane defined by the blade's span and the blade's chord. One can see the blade root (3), the tip (6), the leading edge (4), the trailing edge (5) and the shoulder (7). A frame of reference of a wind turbine blade (2) can, e.g., be based on the span line (20) and a chord line (19) perpendicular to the span line.

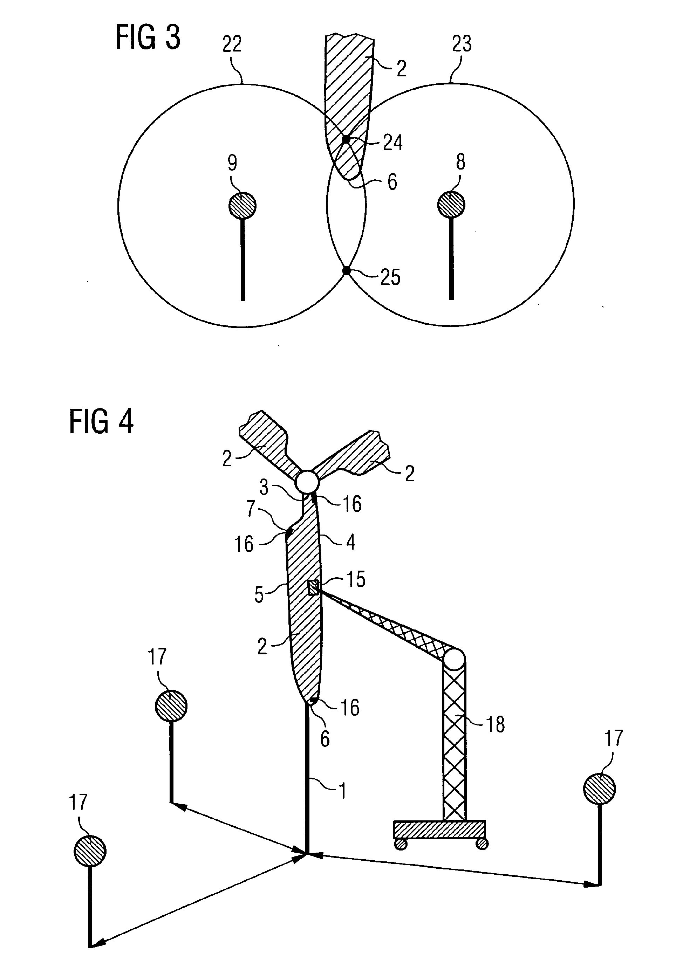

A first embodiment of the inventive method will now be described in more detail with respect to Figure 2 and 3.
Figure 2 schematically shows a wind turbine (1) equipped with three wind turbine blades (2) in the field in a perspective view. Characteristic geometrical features of a wind turbine blade are the root (3), the leading edge (4), the trailing edge (5), the tip (6) and the shoulder (7).

The exact size and shape of the wind turbine blade is either known from the manufacturer or the characteristic features of the blade were measured or scanned by a local positioning system before mounting the blade on the wind turbine. As a frame of reference for all subsequent measurements the location of the span line in the blade root is used as origin and the plane containing the span line (20) and the chord line (19) in the root are used in the present embodiment. However, other origins than the root can be used as well.

Now one side of the blade is to be two-dimensionally scanned by a non-destructive testing probe. Non-destructive testing probe readout as well as the corresponding two-dimensional probe position shall be recorded. The non-destructive testing probe can be an ultrasonic probe, an x-ray probe, a nuclear magnetic resonance probe or a heat flow direction probe, respectively. In the present embodiment an ultrasonic probe is used. First a transponder of a positioning system, for instance a radar system comprising two transmitters which emit non-directed radiation, is installed and calibrated. Further an analysis unit, here for example a PC, is installed, initialized and wirelessly connected with the non-destructive testing probe (15) comprising the transponder. For achieving well-defined results regarding the probe position, the two transmitters (8) and (9) should be placed in a height (10), (11) which is smaller than the minimal height (12) of the tip (6).

The reason for this is illustrated in Figure 3. A transmitter emitting non-directed radiation is only able to measure the distance to the detected probe (15) comprising the transponder. This means, that the detected probe (15) can generally be located only on the surface of a sphere. The use of a second transmitter reduces the possible location of the probe (15), which is detected by both transmitters. The probe (15) can be located only at positions where the spheres of the two transmitters regarding the measured distance intersect. However, if the transmitters are placed in particular distances (13), (14) to the wind turbine and have a known distance (21) to each other. This information allows it to reduce the possible probe locations to two points, where the two spheres can intersect.

In Figure 3 the two transmitters (8) (9) and the blade (2) of Figure 2 are schematically shown in a front view. The left circle (22) indicates the possible locations of the probe as detected by the left transmitter (9). The right circle (23) indicates the possible locations of the probe as detected by the right transmitter (8). The intersection point (24) is detected by both transmitters and corresponds to the actual position of the probe (15) on the blade (2). But there is a second intersection point (25) in the plane of the blade, which is also detected by both transmitters and therefore could also be the actual position of the probe (15). If the tip (6) of the blade is placed in a height (12), which is at least the height (10) (11) of each transmitter (8) (9), then the point (25) can be excluded as possible position of the probe.

The blade which is to be scanned should preferably hang vertically downwards. Then the non-destructive testing probe (15) comprising the transponder of the local positioning system, is moved around characteristic geometrical features of the blade. This can be done with a tool or manually by a person rappelling down the blade by moving the probe (15) from the blade root (6) along the leading edge (4) to the tip (6), and back again to the root along the trailing edge (5). With these data the actual position of the frame of reference of the turbine blade in the field is fixed and each position of the testing probe can be transformed into an intrinsic position defined with respect to this frame of reference.

Next, the blade is tested with the non-destructive testing probe (15) comprising the transponder. The intrinsic position of the testing probe is assigned to the testing data recorded at the respective position, for example by use of the PC. Again, the testing can be done manually by a person rappelling down the blade or with a tool. The testing probe can further have a display which shows the coordinates of the actual probe position and possibly also the probe readout. While the blade is tested, all data concerning probe position and non-destructive testing probe readout are recorded simultaneously and are stored on the PC.

When the testing is done it is possible to make any desired plot, e.g. contour plots of non-destructive testing reading versus position, sections in any direction, and so on. Anything that was not properly tested can now immediately be tested again. The general result of the testing is a coupling between non-destructive testing probe readout and the two-dimensional position on the blade.

Alternatively, for getting a three-dimensional coupling between non-destructive testing probe readout and intrinsic position on the blade, three of the former described transmitters can be used. In this case all three transmitters can be installed in an arbitrary height, as long as the blade is placed in the active field of the transmitters.

A second embodiment of the inventive method will be described with reference to Figure 4. Elements corresponding to elements of the first embodiment will be designated with the same reference numeral and will not be described again.

Now a three-dimensional coupling between non-destructive testing probe readout and intrinsic position on a wind turbine blade is described. Before mounting the turbine blade a set of permanent transponders (16), e.g. radar transponders in the present embodiment, were fixed on the blade at positions which allow an identification of the frame of reference. For example, one permanent transponder was fixed at the blade root (3) on the side towards the leading edge (4), a second transponder was fixed at the tip (6) and a third on the shoulder (7). This is shown in Figure 4. One can see in Figure 3 the wind turbine (1) of Figure 2 with turbine blades (2) which are equipped with three permanent transponders (16) and surrounded by three transmitters (17). Additionally, a crane (18) is shown which moves the non-destructive testing probe with transponder (15) for the testing.

For the further measurement three radar transmitters (17) will be placed in the field around the wind turbine. Before testing, the position of the permanent transponders is recorded. Then the blade is tested with the non-destructive testing probe comprising a radar transponder (15) using a crane (18) or a robot to reach the mounted turbine blade. This is also shown in Figure 4. As described in the first embodiment, all data concerning probe position and non-destructive testing probe readout are recorded simultaneously. The obtained result is a coupling between non-destructive testing probe readout and the three-dimensional position on the blade. Of course, instead of using a crane, a technician could rappel from the hub of the rotor.

Although non-directed transmitters were used in the embodiment it is also possible to use transmitters which send out directed radiation, e.g. a laser beam, and in which the direction into which the radiation is sent out can be varied and measured. Then, only one transmitter would be enough since the angle at which the radiation is sent out can be detected directly from the transmitter and the distance of the transponder, e.g. a simple reflector, can be established based on, e.g. interferometric measurements or time delay of returning laser pulses. With knowing the angle and the distance, the three-dimensional position of the reflector at the probe (or a reflector permanently fixed to the blade) can be established with respect to the transmitter. After scanning, e.g. the contour of the blade for establishing its frame of reference, the intrinsic position of the testing probe in the blade's frame of reference can be assigned to the testing date of the testing probe.

## Claims

1. A method of non-destructively testing a work piece,
wherein
- the work piece (2) is placed within an active field of a positioning system (8, 9, 17);
- a frame of reference of the work piece (2) is established in the coordinates of the positioning system (8, 9, 17);
- testing data is acquired for the work piece (2) with a non-destructive testing probe (15), which comprises a transponder of the positioning system, while the position of the testing probe is recorded by the positioning system;
- the position of the testing probe (15) is transformed into an intrinsic position defined with respect to the frame of reference of the work piece (2); and
- the intrinsic position of the testing probe (15) is assigned to the testing data recorded at the respective position.

2. The method as claimed in claim 1,
wherein
the frame of reference of the work piece (2) is established based on the geometry of the work piece (2).

3. The method as claimed in claim 2,
wherein
the geometry of the work piece (2) is detected by scanning at least parts of the contour of the work piece (2) with a transponder of the positioning system.

4. The method as claimed in claim 2,
wherein
the geometry of the work piece (2) is detected by determining the position of specific transponders (16), which are fixed to the work piece (2), by the positioning system.

5. The method as claimed in any of the claims 1 to 4,
wherein
the position and assigned testing data are stored in a format that gives progressive scan, contour plots or colour-coded shading, and that can be fitted with templates, rejection criteria or alarms.

6. The method as claimed in any of the claims 1 to 5,
wherein
a wind turbine blade (2) is tested.

7. The method as claimed in claim 6,
wherein
a chord line (20) and the span line (19) of the blade are used as frame of reference of the blade (2).

8. A non-destructive testing arrangement,
**characterised in that**
it comprises a non-destructive testing probe (15) equipped with a transponder for a positioning system.

9. The non-destructive testing arrangement as claimed in claim 8,
**characterised in that**
it further comprises a positioning system with at least one transmitter (8, 9, 17), which emits directional radiation the direction of which can be controlled.

10. The non-destructive testing arrangement as claimed in claim 8,
**characterised in that**
it further comprises a positioning system with at least two transmitters (8, 9, 17), which emit non-directional radiation.

11. The non-destructive testing arrangement as claimed in any of the claims 8 to 10,
**characterised in that**
the positioning system is a GPS, a differential GPS, an ultrasonic positioning system, a laser positioning system or a radar positioning system.

12. The non-destructive testing arrangement as claimed in any of the claims 8 to 11,
**characterised in that**
it further comprises a database for storing the position and the assigned testing data in a format that gives P-scan, contour plots or colour-coded shading, and that can be fitted with templates, rejection criteria or alarms.
